# EUROPÄISCHE PATENTSCHRIFT

(11) **EP 2 117 088 B1**
(45) Veröffentlichungstag und Bekanntmachung des Hinweises auf die Patenterteilung: **12.10.2016**
(21) Anmeldenummer: 08008541.8
(22) Anmeldetag: 07.05.2008
(51) Int. Cl.: H01R 43/052

(54) **Kabelbearbeitungseinrichtung**
Cable processing device
Dispositif de traitement de câble

(43) Veröffentlichungstag der Anmeldung: 11.11.2009
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE); Wuhrer, Alexander, 69190 Walldorf (DE)
(74) Vertreter: Hoffmann Eitle

(56) Entgegenhaltungen:
- EP-A- 0 376 416
- EP-A- 1 447 888
- EP-A- 1 548 903
- FR-A- 2 129 845
- FR-A- 2 245 850
- FR-A- 2 667 910
- FR-A- 2 678 134
- JP-A- 6 084 575
- US-A- 3 587 158

## Beschreibung

### Technisches Gebiet

Die Erfindung betrifft eine Kabelbearbeitungseinrichtung mit Bearbeitungsstationen zur Konfektionierung eines Kabels, wobei eine Zuführeinrichtung das Kabel den Bearbeitungsstationen zuführt, die durch einen Greifer mit Greiferbacken gebildet ist, wobei die Greiferbacken in eine erste Stellung bringbar sind, in der sie unverschiebbar an dem Kabel anliegen und in eine zweite Stellung, in der das Kabel so eng geführt ist, dass es nicht herausfallen und den Bearbeitungsstationen gezielt und präzise zugeführt werden kann und wobei die Greiferbacken durch einen motorischen Antrieb in die erste und die zweite Stellung bringbar sind.

### Stand der Technik

Eine solche Kabelbearbeitungseinrichtung ist aus der JP 06084575A bekannt. Die Verarbeitung dünner und flexibler Kabel eines Durchmessers von weniger als 1 mm gelingt damit nicht störungsfrei und es kommt immer wieder zu Störungen des Kabelflusses in dem Greifer.

Bei einer aus der EP 1548903 A1 bekannten Kabelbearbeitungseinrichtung ist der Schwenkarm mit einem Greifer im Bereich des Schwenkarmkopfes versehen, der es gestattet, das Kabel einzuklemmen, um den Isoliermantel von dem vorderen Ende des Kabels abzuziehen, wenn dieses in eine Bearbeitungsstation eingeführt ist. Zur eigentlichen Zuführung des Kabels zu den Bearbeitungsstationen ist am vorderen Ende des Schwenkarms ein sich parallel zu dessen Längserstreckung vorstehendes, austauschbares Düsenrohr vorgesehen, das verschiedene Innendurchmesser haben kann, um Kabel unterschiedlicher Durchmesser hinreichend präzise und störungsfrei führen zu können. Die Anpassung der Durchmesser der Düsenrohre an die Durchmesser und Laufeigenschaften der jeweiligen Kabel gelingt nur unvollständig, weil keine direkte Anpassung oder Nachjustierung möglich ist, die die jeweiligen Besonderheiten berücksichtigt. Außerdem müssen verschiedene Düsenrohre mit unterschiedlichem Innendurchmesser vorgehalten werden, was einen erheblichen Aufwand erfordert. Außerdem ist der Austausch an sich ist mit erheblichem Aufwand verbunden.

### Darstellung der Erfindung

Der Erfindung liegt die Aufgabe zu Grunde, einen Greiferantrieb gemäß der JP 06-084575 A oder der EP 1 548 903 A1 derart weiter zu entwickeln, dass es gelingt, den verschiedenen Bearbeitungsstationen Kabel unterschiedlicher Durchmesser störungsfrei und in der erforderlichen Präzision zuzuführen, ohne dass es der Verwendung von Düsenrohren eines unterschiedlichen Innendurchmessers bedarf. Ferner soll sich eine Verminderung des Gewichtes des Schwenkarms vor allem im Bereich des Schwenkarmkopfes ergeben.

Diese Aufgabe wird erfindungsgemäß bei einer Vorrichtung nach dem Oberbegriff durch die kennzeichnenden Merkmale von Anspruch 1 gelöst. Auf vorteilhafte Weiterbildungen nehmen die Unteransprüche Bezug.

Demgemäss ist es erfindungsgemäß vorgesehen, dass zumindest die zweite Stellung der Greiferbacken auf unterschiedliche Werte fest einstellbar ist. Einstellungen des Hubs von z. B. Pneumatikzylindern sind zwar grundsätzlich bekannt, so z. B. aus der FR 2 245 850, dort allerdings nur zur Einstellung eines Werts, der dann ständig reproduziert werden soll.

Vorteilhaft sind sowohl die Positionen der ersten als auch der zweiten Stellung der Greiferbacken auf unterschiedliche Werte fest einstellbar ausgebildet, um Kabel unterschiedlicher Durchmesser im erforderlichen Maße in der einen Stellung sicher zu ergreifen und in der anderen Stellung der Greiferbacken durch diese ohne größeren Kraftaufwand hindurchschieben und dennoch hinreichend präzise führen zu können.

Als besonders vorteilhaft hat es sich erwiesen, wenn zumindest die zweite Stellung der Greiferbacken kontinuierlich veränderbar und auf unterschiedliche Werte einstellbar ist. Dadurch ist eine feinfühlige Anpassung der Weite der Greiferbacken an den jeweiligen Durchmesser und die Laufeigenschaften des Kabels möglich, derart, dass das Kabel in der einen Stellung der Greiferbacken sicher und dennoch beschädigungsfrei erfasst und in der anderen Stellung störungsfrei und präzise durch den Zwischenraum der Greiferbacken hindurchgeführt werden kann. Der Zwischenraum wird zu diesem Zweck gerade so sehr erweitert, dass das Kabel in Querrichtung nicht aus dem Spalt herausfallen kann aber dennoch in Längsrichtung relativ verschiebbar ist. Zweckmäßig umschließen die Greiferbacken das Kabel hierzu an mehreren in Umfangsrichtung verteilen Stellen, wobei die einander in Umfangsrichtung gegenüberliegenden Greiferbacken das Kabel in der ersten Stellung unverschiebbar anliegend berühren und in der zweiten Stellung relativ verschiebbar und gegebenenfalls mit geringem Spiel.

Die Greiferbacken werden in der ersten Stellung unverschiebbar an das Kabel angelegt, wodurch die zum Abisolieren des vorderen Endes auf das Kabel auszuübenden Kräfte auf das Kabel übertragen werden können. Dazu genügt im Extremfall eine Anpressung der Greiferbacken mit einer definierten Kraft an das Kabel.

In der zweiten Stellung wird das Kabel demgegenüber längsverschiebbar und so eng durch einen definiert erweiterten Zwischenraum der Greiferbacken hindurch geführt, dass es nicht herausfallen und den Bearbeitungsstationen gezielt und präzise zugeführt werden kann. Dafür ist es von erheblicher Bedeutung, wenn die zweite Stellung der Greiferbacken veränderbar ist. Insbesondere durch eine stufenlose Veränderung der Weite des Zwischenraumes zwischen den Greiferbacken und dem Kabel in der zweiten Stellung der Greiferbacken kann eine Verarbeitung von extrem dünnen und biegeweichen Kabeln störungsfrei erfolgen, in dem das für eine Relativverschiebung des Kabels in dem Greifer erforderliche Spiel auf einen optimalen Wert eingestellt wird. Auch Kabel, die aus einem Fass oder von einer Trommel abgezogen werden und gegebenenfalls in sich verdrillt sind, können sich in der zweiten Stellung der Greiferbacken nicht mehr beim Hindurchschieben in den ineinandergreifenden Zacken der Greiferbacken verhaken.

Die Greiferbacken können zur Erreichung diesen Zweckes leicht und kleinvolumig gestaltet sein, was es nicht nur gestattet, sie unmittelbar in den Arbeitsbereich der Bearbeitungsstationen im erforderlichen Maße einzuführen, sondern was gleichfalls dazu beiträgt, die Größe der Trägheitsmassen im Bereich des Greiferkopfes zu vermindern und als Folge davon, schnellere Schwenkbewegungen des Greifarms zu ermöglichen, ohne dass es dazu größerer Antriebskräfte bedarf.

Dabei gelingt es durch eine alternative und/oder zusätzliche Veränderung der Greiferbacken in der zweiten Stellung, Kabelbeschädigungen durch die Greiferbacken zu vermeiden, die sich ergeben können, wenn die Kabel dünn und besonders biegeweich sind, wie beispielsweise Kabel eines Durchmessers von weniger als 0,5 mm.

Die Greiferbacken sind zweckmäßig in der ersten und/oder der zweiten Stellung durch separate Einstellmittel justierbar. Die Umstellung von einem ersten auf einen zweiten Kabeldurchmesser gelingt dadurch besonders schnell und betriebsbedingte Schwingungen können nicht ohne weiteres zu einer unerwünschten Veränderung einer zuvor bereits optimierten, ersten und/oder der zweiten Stellung führen.

Als vorteilhaft hat sich ferner erwiesen, wenn die Greiferbacken signalgesteuert in die erste und/oder die zweite Stellung bringbar sind. Die Umstellung auf abweichende Kabeldurchmesser kann dadurch nochmals beschleunigt und die Umrüstzeit verringert werden.

Die erste und/oder die zweite Stellung der Greiferbacken kann durch einen motorischen Antrieb definierbar sein, der durch einen elektrischen Schrittmotor gebildet ist. Die Durchmesserumstellung gelingt dadurch besonders schnell und präzise, wobei moderne Schrittmotoren auf digitalem Wege eine annähernd stufenlose Veränderung der ersten und /oder zweiten Stellung ermöglichen.

Zumindest die zweite Stellung der Greiferbacken ist durch verstellbare Anschläge einer druckmittelbeaufschlagbaren Kolben-/Zylindereinheit definierbar. Die erste Stellung der Greiferbacken kann auch durch verstellbare Anschläge einer druckmittelbeaufschlagbaren Kolben-/Zylindereinheit definierbar sein.

Die Anschläge können dabei manuell oder motorisch verstellbar sein.

Ferner kann die Verstellung der Anschläge indirekt dadurch erfolgen, dass der computergesteuerte, motorische Schwenkantrieb des Schwenkarms der Kabelbearbeitungseinrichtung zugleich dazu benutzt wird, die Anschläge in Abhängigkeit von der Dicke und Art des zu verarbeitenden Kabels in eine zuvor empirisch ermittelte, optimale Position zu verschieben. Dazu können die Anschläge durch Stellringe verstellbar sind, die durch eine vorprogrammierte, gezielte Schwenkbewegung des Schwenkarms mit einem stationär gelagerten Nocken in Eingriff gebracht und in der erforderlichen Weise eingestellt werden. Dies kann programmgesteuert und vollautomatisch erfolgen.

Die Kolben-/Zylindereinheit kann einen hin- und her bewegbaren Kolben mit einer Kolbenstange zur Betätigung der Greiferbacken des Greifers aufweisen sowie Anschlüsse zur alternativen Einspeisung eines druckbeaufschlagbaren Mediums in jeweils einen der von dem Kolben begrenzten Räume des Zylinders sowie zur Druckentlastung des jeweils anderen Raumes, wobei der Kolben in dem Zylinder unverdrehbar gelagert und an zumindest einem Ende mit einem parallel zu seiner Bewegungsrichtung vorstehenden Anschlag versehen ist, wobei der den Kolben enthaltende Zylinder als Einstellmittel einen dem Anschlag zugewandten, relativ verdrehbaren Gegenanschlag aufweist mit zumindest einer Abstützfläche, die an den Anschlag anlegbar ist und die durch zumindest eine die gedachte Verlängerung der Kolbenachse konzentrisch umschließende, gewendelt ansteigende, erste Kreisringfläche gebildet ist. Die Bauform ermöglicht eine ganz und gar stufenlose Veränderung der ersten und /oder zweiten Stellung der Greiferbacken. Der Hub des Kolbens ist durch eine Relativverdrehung des Gegenanschlags verhältnismäßig einfach auf einen bestimmten Wert einstellbar und ohne dass es der Verwendung von Werkzeugen bedarf. Es ist lediglich erforderlich, den Gegenanschlag in dem Zylinder um seine Achse zu verdrehen und gegenüber dem Zylinder relativ beweglich abzudichten.

Als vorteilhaft hat es sich erwiesen, wenn zusätzlich zu dem Gegenanschlag der Anschlag die Achse des Kolbens konzentrisch umschließt und die Abstützfläche mit einer ebenfalls gewendelt ausgebildeten, zweiten Kreisringfläche anliegend berührt. Die Dauerhaltbarkeit wird dadurch verbessert.

Der Kolben kann an beiden Enden mit jeweils einem Anschlag versehen sein, wobei jedem Anschlag ein relativ verdrehbarer Gegenanschlag des Zylinders zugewandt ist. Sowohl die zweite als auch die erste Stellung der Greiferbacken kann dadurch stufenlos verändert werden.

Der technische Aufbau vereinfacht sich bei einer solchen Bauform, wenn einer der Gegenanschläge von der Kolbenstange zentrisch durchdrungen ist und wenn der von der Kolbenstange durchdrungene Gegenanschlag nur zusammen mit dem Zylinder und relativ zu dem Kolben um seine Achse verdrehbar ist.

Die Abstützfläche kann durch abgestuft aufeinanderfolgende Teilflächen gebildet sein, die sich quer zur Kolbenachse erstrecken und die dem Verlauf der gewendelt ansteigenden Kreisringsfläche in Umfangsrichtung folgend aufeinanderfolgend vorgesehen sind. Auch bei erheblichen, betriebsbedingten Schwingungen wird hierdurch eine unerwünschte Dejustierung der ersten und/oder zweiten Stellung unterdrückt. Die Abstufung der Teilflächen in Bewegungsrichtung kann dabei sehr fein gewählt werden, um angenähert eine stufenlose Verstellbarkeit zu simulieren.

Die Greiferbacken können durch einen motorischen Antrieb in die erste und/oder die zweite Stellung motorisch veränderbar sein. Beide Positionen unterscheiden sich örtlich nur sehr geringfügig voneinander und es sind daher keine großen Wege der Greiferbacken bei der Überführung von der ersten Stellung in die zweite Stellung zu überwinden. Demgemäss können verschiedene und schnell laufende Antriebsmotoren zur Anwendung gelangen.

Falls der motorische Antrieb durch einen Elektromotor gebildet ist, hat es sich bewährt, dass der Elektromotor als Schrittmotor ausgebildet ist und zugleich für die Bewegung der Greiferbacken und die Festlegung und Optimierung der ersten und/oder der zweiten Stellung verwendbar ist. Die Greiferbacken lassen sich so signalgesteuert in die erste und/oder die zweite Stellung überführen und die erste und/oder die zweite Stellung signalgesteuert optimieren.

Falls der motorische Antrieb durch eine druckmittelberufschlagbare Kolben-/Zylindereinheit gebildet ist, hat es sich bewährt, dass die Greiferbacken durch die Kolben-/Zylindereinheit signalgesteuert in die erste und die zweite Stellung bringbar sind. Dazu können signalbetätigbare Magnetventile verwendet werden, um die Arbeitsräume der Kolben-/Zylindereinheit im erforderlichen Maße mit druckbeaufschlagbarem Strömungsmittel zu befüllen bzw. sie zu entleeren.

Nach einer vorteilhaften Ausgestaltung ist es vorgesehen, dass zusätzlich der Anschlag die Achse des Kolbens konzentrisch umschließt und die Abstützfläche mit einer ebenfalls gewendelten ausgebildeten, zweiten Kreisringfläche anliegend berührt. Die Flächenpressung ist dadurch umgekehrt proportional zur jeweiligen Größe der gegenseitigen Berührungsfläche verringert, was den Verschleiß und Deformierungen unterdrückt und dazu beiträgt, eine leichte Verstellmöglichkeit langfristig aufrecht zu erhalten. Beide einander berührende Flächen können die Achse des Kolbens in einem Winkelmaß von 360 ° ganz umschließen.

Der Kolben kann auch an beiden Enden mit jeweils einem Anschlag versehen sein, wobei jedem Anschlag ein relativ verdrehbarer Gegenanschlag des Zylinders entsprechend den vorstehenden Darlegungen ausgebildet und zugewandt sein kann. Der oder die Gegenanschläge des Zylinders können dabei durch Stellscheiben gebildet sein, die verdrehbar in oder an den Zylindern gelagert und von außen zugänglich sind.

Bei einem solchen Greiferantrieb, bei dem einer der Gegenanschläge von der Kolbenstange zentrisch durchdrungen ist, kann es vorgesehen sein, dass der von der Kolbenstange durchdrungene Gegenanschlag nur zusammen mit dem Zylinder und relativ zu dem Kolben und der Kolbenstange um seine Achse verdrehbar ist. Beide Anschläge und damit der Hub lassen sich dadurch besonders bequem im gewünschten Maße verschieben.

Die Abstützfläche kann auch durch abgestuft aufeinanderfolgende Teilflächen gebildet sein, die sich quer zur Kolbenachse erstrecken und die dem Verlauf der gewendelt ansteigenden Kreisringsfläche folgend aufeinanderfolgend angeordnet sind. Beim Anschlagen der Anschläge an die Gegenanschläge können dadurch keine umfangsgerichteten Reaktionskräfte und als Folge davon unerwünschte Verstellungen des Hubes auftreten.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 eine Kolben - /Zylinderanordnung in schematischer, längsgeschnittener Darstellung.
Fig. 2 eine Abstützfläche, die durch abgestuft aufeinanderfolgende Teilflächen gebildet ist

### Ausführung der Erfindung

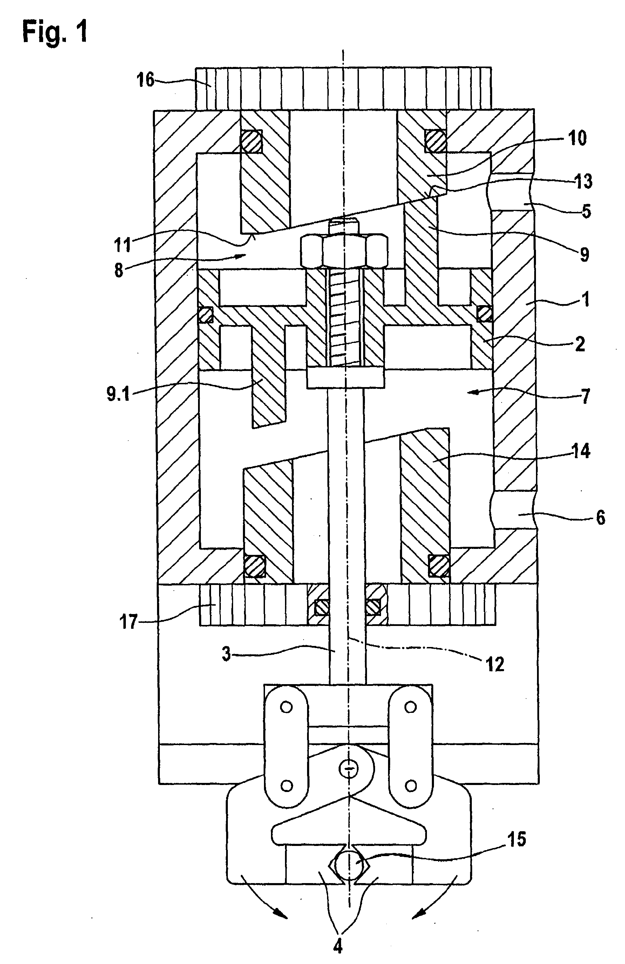

Fig. 1 zeigt eine Kabelbearbeitungseinrichtung, die zur Beschickung von nicht dargestellten Bearbeitungsstationen zur Konfektionierung eines Kabels 15 bestimmt ist. Dabei führt eine Zuführeinrichtung das Kabel 15 den Bearbeitungsstationen zuführt, die durch einen Greifer mit Greiferbacken 4 gebildet ist, wobei die Greiferbacken 4 in eine erste Stellung bringbar sind, in der sie unverschiebbar an dem Kabel 15 anliegen und in eine zweite Stellung, in der das Kabel 15 so eng geführt ist, dass es nicht herausfallen und den Bearbeitungsstationen gezielt und präzise zugeführt werden kann und wobei die Greiferbacken 4 durch einen motorischen Antrieb in die erste und die zweite Stellung bringbar sind. Zumindest die zweite Stellung der Greiferbacken 4 ist veränderbar ausgebildet.

Die Greiferbacken 4 sind bei der Bauform nach Fig. 1 durch eine druckmittelbeaufschlagbare Kolben-/Zylindereinheit 1, 2 in die erste und die zweite Stellung bringbar.

Die Kolben-/Zylindereinheit umfasst einen einen hin- und her bewegbaren Kolben 2 mit einer Kolbenstange 3 zur Betätigung der Greiferbacken 4 des Greifers aufweist sowie Anschlüsse 5, 6 zur alternativen Einspeisung eines druckbeaufschlagbaren Mediums in jeweils einen der von dem Kolben begrenzten Räume 7, 8 des Zylinders 1 sowie zur Druckentlastung des jeweils anderen Raumes 8, 7, dass der Kolben 2 in dem Zylinder (1) unverdrehbar gelagert und an zumindest einem Ende mit einem parallel zu seiner Bewegungsrichtung vorstehenden Anschlag 9 versehen ist, dass der den Kolben 2 enthaltende Zylinder 1 als Einstellmittel einen dem Anschlag 9 zugewandten, relativ verdrehbaren Gegenanschlag 10 aufweist mit einer Abstützfläche 11, die an den Anschlag 9 anlegbar ist und die durch eine die gedachte Verlängerung der Kolbenachse 12 konzentrisch umschließende, gewendelt ansteigende, erste Kreisringfläche gebildet ist.

Zusätzlich umschließt der Anschlag 9 die Achse des Kolbens 2 konzentrisch mit einer gewendelt ausgebildeten, zweiten Kreisringfläche 13, die an der gewendelt ansteigenden Abstützfläche 11 des Gegenanschlags 10 anliegt.

Der Kolben 2 ist an beiden Enden mit jeweils einem Anschlag (9, 9.1) versehen, wobei jedem Anschlag 9, 9.1 ein relativ verdrehbarer Gegenanschlag 10, 14 des Zylinders 1 zugewandt ist.

Einer der Gegenanschläge 14 bildet einen Bestandteil eines Stellrings 17, der von der Kolbenstange 3 zentrisch durchdrungen ist. Der von der Kolbenstange 3 durchdrungene Gegenanschlag 14 ist nur zusammen mit dem Zylinder 1 und relativ zu dem Kolben 2 um seine Achse verdrehbar.

Der in Fig. 1 gezeigte Greiferantrieb der Kabelbearbeitungseinrichtung umfasst einen somit in einem Zylinder 1 hin- und her bewegbaren Kolben 2 mit einer Kolbenstange 3, die an Greiferbacken 4 angreift, sowie Anschlüssen 5, 6 zur alternativen Einspeisung eines druckbeaufschlagbaren Mediums in jeweils einen der von dem Kolben begrenzten Räume 7, 8 des Zylinders 1 sowie zur Druckentlastung des jeweils anderen Raumes 8, 7. Die beiden Räume 7, 8 werden im allgemeinen alternativ mit Druckluft beaufschlagt, wobei die Möglichkeit besteht, die beim Umschalten aus dem einen Raum entweichende Druckluft zu drosseln und die Hubbewegung des Kolbens 2 insbesondere kurz vor Erreichen des jeweiligen Gegenanschlags abzubremsen. Einer mechanischen Beschädigung des Anschlags durch die Berührung des Gegenanschlags wird dadurch begegnet.

Der Kolben 2 ist in dem Zylinder 1 unverdrehbar gelagert und an beiden Enden mit einem parallel zu seiner Bewegungsrichtung vorstehenden Anschlag 9, 9.1 versehen, wobei der Zylinder 1 zwei den Anschlägen 9, 9.1 zugewandte, relativ verdrehbare Gegenanschläge 10, 14 aufweist mit jeweils zumindest einer Abstützfläche 11, die an den jeweiligen Anschlag 9, 9.1 anlegbar ist und die durch zumindest eine die gedachte Verlängerung der Kolbenachse 12 konzentrisch umschließende, gewendelt ansteigende, erste Kreisringfläche gebildet ist, die jeweils mittels eines Stellrings 16, 17 relativ zu dem Kolben 2 verdrehbar ist. Die Stellringe 16, 17 sind zu diesem Zweck durch O-Ringdichtungen gasdicht und relativ verdrehbar, jedoch in Längsrichtung unverschiebbar, in dem Zylinder 1 gelagert. Die Kolbenstange 3 ist relativ verschiebbar gegenüber den Stellringen 16, 17 durch Ringdichtungen abgedichtet und zentrisch dem Zylinder 1 gelagert.

Die Greiferbacken 4 sind in einem gemeinsamen, ortsfesten Gelenk des Zylinders 1 gelagert und durch beiderseits des Gelenkes an den Greiferbacken 4 angreifende Schubstangen mit der Kolbenstange 3 verbunden. Eine nach oben gerichtete Relativbewegung der Kolbenstange hat eine Öffnungsbewegung der Greiferbacken 4 zu Folge, eine abwärtsgerichtete Relativbewegung eine Schließbewegung und ein Anlegen der Greiferbacken an den Außenumfang des Kabels. In beiden Richtungen lässt sich der Hub und damit zugleich die Öffnungs- und die Schließbewegung des Greifers mit Hilfe der Stellringe 16, 17 so feinfühlig einstellen, dass unabhängig vom jeweiligen Kabeldurchmesser einerseits ein festes und beschädigungsfreies Festhalten der Greiferbacken an dem Kabel 15 erreicht wird und andererseits eine gute Führung des Kabels 15 beim Vorschieben durch den Greifbereich der leicht gelockerten Greiferbacken 4. Diese sind prismatisch ausgebildet, wodurch das Kabel 15 an vier Umfangsstellen zugleich berührt wird. Die erste und/oder die zweite Stellung der Greiferbacken 4 ist durch separate Einstellmittel feinfühlig justierbar, die durch Stellringe 16, 17 gebildet sind. Die Einstellung kann manuell oder motorisch erfolgen.

Die Stellringe 16, 17 können mit jeweils einer Einstellskala zum Ablesen des jeweils eingestellten Hubs versehen sein. Falls sie relativ zu dem Zylinder 1 verdreht werden, ergibt sich eine veränderte Zuordnung der Anschläge 9, 9.1 zu dem jeweiligen Gegenanschlag 10, 14 und eine entsprechend veränderte Hubbegrenzung des Kolbens 2 in den beiden Richtungen. Natürlich kann auch nur einer der Stellringe 16, 17 verdreht und dadurch nur einer der Anschläge 9, 9.1 verstellt werden.

Dabei kann es beispielsweise vorgesehen sein, dass zusätzlich der Anschlag 9 die Achse des Kolbens 2 konzentrisch umschließt und die Abstützfläche 11 mit einer gewendelt ausgebildeten, zweiten Kreisringfläche 13 anliegend berührt, um Beschädigungen durch eine hart anschlagende Abstützfläche 11 zu vermeiden.

Es besteht auch die Möglichkeit, den Gegenanschlag 14 unverdrehbar in dem Zylinder 1 zu lagern und vorzusehen, den Gegenanschlag 14 nur zusammen mit dem Zylinder 1 und relativ zu dem Kolben 2 um seine Achse verdrehbar auszubilden. Die Zugänglichkeit der Einrichtung zum Verstellen des Gegenanschlags 14 wird dadurch erheblich verbessert und eine Reduzierung von Unfallgefährdung erreicht. Die Druckluftanschlüsse 5, 6 müssen dann allerdings flexibel ausgebildet werden und z.B. durch Schlauchleitungen gebildet sein.

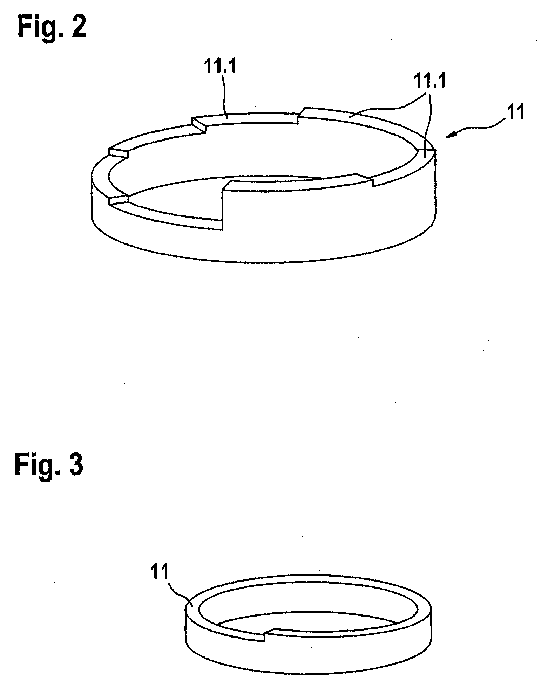

Fig. 2 zeigt eine Abstützfläche 11, die durch abgestuft aufeinanderfolgende Teilflächen 11.1 gebildet ist, die sich jeweils quer zur Kolbenachse 3 erstrecken und die dem Verlauf der gewendelt ansteigenden Kreisringsfläche 11 folgend, nach Art von Treppenstufen, aufeinanderfolgend angeordnet sind. Auf einer derart abgestuft ausgebildeten Abstützfläche 11 können beim durch den Hub des Kolbens 2 bedingten Anschlagen der Anschläge 9, 14 keine umfangsgerichteten Reaktionskräfte ausgeübt werden, was einer unerwünschten Verstellung des Hubs während der Benutzung des Greiferantriebs vorbeugt. Insbesondere bei einer Verwendung des Greiferantriebs in schnellbewegten Schwenkarmen, mit denen Kabel aufeinanderfolgend verschiedenen Konfektioniermaschinen zur Bestückung mit Crimpkontaktelementen zugeführt werden, ist das von großem Vorteil. Die Stellringe 16, 17 müssen mit Gegenanschlägen 13, 14 versehn sein, die sich ebenfalls quer zur Längsachse erstrecken.

Fig. 3 zeigt eine Abstützfläche 11, die durch eine gewendelt ansteigende Kreisringfläche gebildet ist. Die Steigung der Kreisringfläche, bezogen auf eine horizontale Ebene, beträgt bevorzugt 2° bis 5°. Hierdurch wir eine gute Selbsthemmung erzielt, die es ebenfalls weitestgehend ausschließt, dass sich während des Betriebes unerwünschte Relativverdrehungen ergeben. Der Vorteil einer solchen Bauform besteht darin, dass die Anschlagsbegrenzung stufenlos eingestellt werden kann, was es insbesondere bei sehr dünnen Kabeln erlaubt, einerseits den erwünschten, festen und beschädigungsfreien Halt des Kabels in dem Greifer zu erzielen und andererseits Beschädigungen des Kabelmantels durch den Greifer zu vermeiden. Die Bauform wird daher bevorzugt.

Falls ein elektromotorischer Antrieb für die Bewegungen der Greiferbacken und gegebenenfalls eine Veränderung und Justierung der ersten und der zweiten Stellung der Greiferbacken zur Anwendung gelangt, beispielsweise ein Schrittmotor, kann der Motor auch getrennt von Schwenkarm in einem Maschinengestell untergebracht sein, dass den Schwenkarm trägt. Die Kraftübertragung auf die Greiferbacken und die Verstelleinrichtung der Anschläge kann in solchen Fällen durch Kniehebel, Wellen und/oder Riemen erfolgen.

Falls ein elektromotorischer Antrieb in Gestalt eines Schrittmotors bezüglich der Veränderung der ersten und/oder der zweiten Stellung der Greiferbacken zur Anwendung gelangt, bietet es sich an, die erste und die zweite Stellung digital festzulegen und die Greiferbacken 4 signalgesteuert in die erste und /oder die zweite Stellung zu bringen.

## Patentansprüche

1. Kabelbearbeitungseinrichtung mit Bearbeitungsstationen zur Konfektionierung eines Kabels (15), wobei eine Zuführeinrichtung das Kabel (15) den Bearbeitungsstationen zuführt, die Zuführeinrichtung durch einen Greifer mit Greiferbacken (4) gebildet ist, wobei die Greiferbacken (4) in eine erste Stellung bringbar sind, in der sie unverschiebbar an dem Kabel (15) anliegen und in eine zweite Stellung, in der das Kabel (15) so eng geführt ist, dass es nicht herausfallen und den Bearbeitungsstationen gezielt und präzise zugeführt werden kann und wobei die Greiferbacken (4) durch einen motorischen Antrieb in die erste und die zweite Stellung bringbar sind, **dadurch gekennzeichnet, dass** zumindest die zweite Stellung der Greiferbacken (4) durch zumindest einen verschiebbaren Anschlag einer druckmittelbeaufschlagbaren Kolben- /Zylindereinheit stufenlos auf unterschiedliche Werte fest einstellbar und justierbar ist.

2. Kabelbearbeitungseinrichtung nach Anspruch 1, **dadurch gekennzeichnet, dass** die erste und/oder die zweite Stellung der Greiferbacken (4) durch separate Einstellmittel auf unterschiedliche Werte fest einstellbar und justierbar ist.

3. Kabelbearbeitungseinrichtung nach Anspruch 1 oder 2, **dadurch gekennzeichnet, dass** die Greiferbacken (4) signalgesteuert in die erste und /oder die zweite Stellung bringbar und justierbar sind.

4. Kabelbearbeitungseinrichtung nach einem der Ansprüche 1 bis 3, **dadurch gekennzeichnet**, die erste und/oder die zweite Stellung der Greiferbacken durch einen elektrischen Schrittmotor einstellbar und justierbar ist.

5. Kabelbearbeitungseinrichtung nach Anspruch 1 bis 3, **dadurch gekennzeichnet, dass** die erste Stellung durch zumindest einen verschiebbaren Anschlag einer druckmittelbeaufschlagbaren Kolben-/Zylindereinheit einstellbar und justierbar ist.

6. Kabelbearbeitungseinrichtung nach Anspruch 1 oder 5, **dadurch gekennzeichnet, dass** die Kolben-/Zylindereinheit einen hin- und her bewegbaren Kolben (2) mit einer Kolbenstange (3) zur Betätigung der Greiferbacken (4) des Greifers aufweist sowie Anschlüsse (5, 6) zur alternativen Einspeisung eines druckbeaufschlagbaren Mediums in jeweils einen der von dem Kolben begrenzten Räume (7, 8) des Zylinders (1) sowie zur Druckentlastung des jeweils anderen Raumes (8, 7), dass der Kolben (2) in dem Zylinder (1) unverdrehbar gelagert und an zumindest einem Ende mit einem parallel zu seiner Bewegungsrichtung vorstehenden Anschlag (9) versehen ist, dass der den Kolben (2) enthaltende Zylinder (1) als Einstellmittel einen dem Anschlag (9) zugewandten, relativ verdrehbaren Gegenanschlag (10) einer von außen zugänglichen Verstellscheibe (16, 17) aufweist mit zumindest einer Abstützfläche (11), die an den Anschlag (9) anlegbar ist und die durch zumindest eine die gedachte Verlängerung der Kolbenachse (12) konzentrisch umschließende, gewendelt ansteigende, erste Kreisringfläche gebildet ist.

7. Kabelbearbeitungseinrichtung nach Anspruch 6, **dadurch gekennzeichnet, dass** zusätzlich der Anschlag (9) die Achse des Kolbens (2) konzentrisch umschließt und die Abstützfläche (11) mit einer gewendelt ausgebildeten, zweiten Kreisringfläche (13) anliegend berührt.

8. Kabelbearbeitungseinrichtung nach Anspruch 6 oder 7, **dadurch gekennzeichnet, dass** der Kolben (2) an beiden Enden mit jeweils einem Anschlag (9, 9.1) versehen ist und dass jedem Anschlag (9, 9.1) ein relativ verdrehbarer Gegenanschlag (10, 14) des Zylinders (1) zugewandt ist.

9. Kabelbearbeitungseinrichtung nach Anspruch 8, **dadurch gekennzeichnet, dass** einer der Gegenanschläge (10, 14) von der Kolbenstange (3) zentrisch durchdrungen ist und dass der von der Kolbenstange (3) durchdrungene Gegenanschlag (14) nur zusammen mit dem Zylinder (1) und relativ zu dem Kolben (2) um seine Achse verdrehbar ist.

10. Kabelbearbeitungseinrichtung nach einem der Ansprüche 6 bis 9, **dadurch gekennzeichnet, dass** die Abstützfläche (11) durch abgestuft aufeinanderfolgende Teilflächen (11.1) gebildet ist, die sich quer zur Kolbenachse (3) erstrecken und die dem Verlauf der gewendelt ansteigenden Kreisringsflache (11) in Umfangsrichtung folgend aufeinanderfolgend vorgesehen sind.

## Claims

1. Cable processing device having processing stations for the manufacture of a cable (15), wherein a delivery device delivers the cable (15) to the processing stations and the delivery device is formed by a gripper having gripper jaws (4), wherein the gripper jaws (4) can be moved into a first position in which they abut non-displaceably against the cable (15) and into a second position in which the cable (15) is guided so tightly that it cannot fall out and can be delivered to the processing stations specifically and precisely and wherein the gripper jaws (4) can be moved by a motor drive into the first and second positions, **characterised in that** at least the second position of the gripper jaws (4) can be fixed and adjusted infinitely variably to different values by at least one displaceable stop of a pressurised piston and cylinder unit.

2. Cable processing device according to claim 1, **characterised in that** the first and/or second position of the gripper jaws (4) can be fixed and adjusted to different values by separate setting means.

3. Cable processing device according to claim 1 or 2, **characterised in that** the gripper jaws (4) can be adjusted and moved into the first and/or second position under signal control.

4. Cable processing device according to any of claims 1 to 3, **characterised in that** the first and/or second position of the gripper jaws can be set and adjusted by an electric stepping motor.

5. Cable processing device according to claims 1 to 3, **characterised in that** the first position can be set and adjusted by at least one displaceable stop of a pressurised piston and cylinder unit.

6. Cable processing device according to claim 1 or 5, **characterised in that** the piston and cylinder unit has a reciprocatable piston (2) with a piston rod (3) for actuating the gripper jaws (4) of the gripper as well as connections (5, 6) for alternately supplying a pressurisable medium into one of the chambers (7, 8) of the cylinder (1) which are defined by the piston, as well as for relieving pressure in the other chamber (8, 7), **in that** the piston (2) is mounted non-rotatably in the cylinder (1) and at at least one end provided with a stop (9) protruding parallel to its direction of movement, **in that** the cylinder (1) containing the piston (2) has as the setting means a relatively rotatable counterstop (10) facing towards the stop (9), of an adjusting disc (16, 17) which is accessible from the outside, with at least one supporting surface (11) which can be applied to the stop (9) and which is formed by at least one spirally ascending first annular surface concentrically surrounding the imaginary extension of the piston axis (12).

7. Cable processing device according to claim 6, **characterised in that** in addition the stop (9) concentrically surrounds the axis of the piston (2) and contacts the supporting surface (11) in abutting relationship with a second annular surface (13) of spiral construction.

8. Cable processing device according to claim 6 or 7, **characterised in that** the piston (2) is provided at each of its two ends with a stop (9, 9.1) and **in that** a relatively rotatable counterstop (10, 14) of the cylinder (1) faces towards each stop (9, 9.1).

9. Cable processing device according to claim 8, **characterised in that** the piston rod (3) extends centrally through one of the counterstops (10, 14) and **in that** the counterstop (14) through which the piston rod (3) extends is rotatable about its own axis only together with the cylinder (1) and relative to the piston (2).

10. Cable processing device according to any of claims 6 to 9, **characterised in that** the supporting surface (11) is formed by partial surfaces (11.1) which succeed each other in steps and which extend transversely to the piston shaft (3) and which are provided successively, following the course of the spirally ascending annular surface (11) in the circumferential direction.

## Revendications

1. Dispositif de traitement de câble comprenant des stations de traitement pour confectionner un câble (15), dans lequel un dispositif d'acheminement achemine le câble (15) aux stations de traitement, le dispositif d'acheminement est formé par un dispositif de préhension avec des mâchoires de préhension (4), dans lequel les mâchoires de préhension (4) peuvent être amenées dans une première position, dans laquelle elles reposent sans pouvoir coulisser sur le câble (15), et dans une deuxième position, dans laquelle le câble (15) est guidé si étroitement qu'il ne peut tomber et qu'il peut être acheminé de manière ciblée et précise aux stations de traitement et dans lequel les mâchoires de préhension (4) peuvent être amenées dans la première et la deuxième position par un entraînement motorisé, **caractérisé en ce qu'**au moins la deuxième position des mâchoires de préhension (4) peut être réglée et ajustée de manière fixe progressivement à différentes valeurs par au moins une butée coulissante d'une unité de piston et cylindre soumise à l'action d'un agent de pression.

2. Dispositif de traitement de câble selon la revendication 1, **caractérisé en ce que** la première et/ou la deuxième position des mâchoires de préhension (4) peut ou peuvent être réglées et ajustées de manière fixe à différentes valeurs par des moyens de réglage séparés.

3. Dispositif de traitement de câble selon la revendication 1 ou 2, **caractérisé en ce que** les mâchoires de préhension (4) peuvent être amenées et ajustées dans la première et/ou la deuxième position par une commande de signaux.

4. Dispositif de traitement de câble selon l'une quelconque des revendications 1 à 3, **caractérisé en ce que** la première et/ou la deuxième position des mâchoires de préhension peuvent être réglées et ajustées par un moteur pas à pas électrique.

5. Dispositif de traitement de câble selon les revendications 1 à 3, **caractérisé en ce que** la première position peut être réglée et ajustée par au moins une butée coulissante d'une unité de piston et cylindre soumise à l'action d'un agent de pression.

6. Dispositif de traitement de câble selon la revendication 1 ou 5, **caractérisé en ce que** l'unité de piston et cylindre présente un piston (2) pouvant effectuer des mouvements de va-et-vient, pourvu d'une tige de piston (3) pour actionner les mâchoires de pression (4) du dispositif de préhension ainsi que des raccords (5, 6) pour injecter en alternance un agent pouvant être soumis à l'action d'une pression dans respectivement un des espaces (7, 8), délimités par le piston, du cylindre (1) et également pour décharger la pression de l'autre espace (8, 7) respectif, **en ce que** le piston (2) est monté de manière à ne pas pouvoir tourner dans le cylindre (1) et est pourvu à au moins une extrémité d'une butée (9) faisant saillie parallèlement à sa direction de déplacement, **en ce que** le cylindre (1) contenant le piston (2) présente, en tant que moyen de réglage, une contre-butée (10) tournée vers la butée (9), pouvant tourner de manière relative, d'une rondelle d'ajustement (16,17) accessible de l'extérieur, avec au moins une surface d'appui (11), qui peut s'appliquer sur la butée (9) et qui est formée par au moins une première surface annulaire ascendante de manière spiralée, renfermant de manière concentrique le prolongement imaginaire de l'axe de piston (12).

7. Dispositif de traitement de câble selon la revendication 6, **caractérisé en ce qu'**en supplément, la butée (9) renferme de manière concentrique l'axe du piston (2) et vient en contact direct avec la surface d'appui (11) par une deuxième surface annulaire (13) réalisée de manière spiralée.

8. Dispositif de traitement de câble selon la revendication 6 ou 7, **caractérisé en ce que** le piston (2) est pourvu aux deux extrémités de respectivement une butée (9, 9.1) et **en ce qu'**une contre-butée (10, 14) pouvant tourner de manière relative du cylindre (1) est tournée vers chaque butée (9, 9.1).

9. Dispositif de traitement de câble selon la revendication 8, **caractérisé en ce qu'**une des contre-butées (10, 14) est traversée au centre par la tige de piston (3), et **en ce que** la contre-butée (14) traversée par la tige de piston (3) ne peut tourner que conjointement avec le cylindre (1) et par rapport au piston (2) autour de son axe.

10. Dispositif de traitement de câble selon l'une quelconque des revendications 6 à 9, **caractérisé en ce que** la surface d'appui (11) est formée par des surfaces partielles (11.1) se suivant les unes les autres de manière étagée, qui s'étendent transversalement à l'axe de piston (3) et qui sont prévues, en se suivant l'une l'autre, de manière à suivre dans la direction périphérique le profil de la surface annulaire (11) ascendante de manière spiralée.
